## Europäisches Patentamt

## European Patent Office

## Office européen des brevets

(19)

(11) Veröffentlichungsnummer : **0 147 558**
**B1**

(12)

# EUROPÄISCHE PATENTSCHRIFT

(45) Veröffentlichungstag der Patentschrift :
07.09.88

(51) Int. Cl.⁴ : **G 01 M 1/22**

(21) Anmeldenummer : **84112683.2**

(22) Anmeldetag : **10.09.81**

(60) Veröffentlichungsnummer der früheren Anmeldung
nach Art. 76 EPÜ : **0074416**

(54) **Verfahren zum Übertragen der gemessenen Lage der Unwucht eines auszuwuchtenden Rotors auf dessen Umfang und Vorrichtung hierzu.**

(43) Veröffentlichungstag der Anmeldung :
**10.07.85 Patentblatt 85/28**

(45) Bekanntmachung des Hinweises auf die Patenterteilung : **07.09.88 Patentblatt 88/36**

(84) Benannte Vertragsstaaten :
**DE FR GB IT**

(56) Entgegenhaltungen :
**US-A- 4 046 017**

(73) Patentinhaber : **CARL SCHENCK AG**
**Landwehrstrasse 55 Postfach 40 18**
**D-6100 Darmstadt (DE)**

(72) Erfinder : **Giers, Alfred, Dipl.-Ing.**
**Messeler Weg12**
**D-6101 Rossdorf (DE)**

(74) Vertreter : **Dallhammer, Herbert, Dipl.-Ing.**
**CARL SCHENCK AG Patentabteilung Postfach 4018**
**Landwehrstrasse 55**
**D-6100 Darmstadt (DE)**

**Beschreibung**

Die Erfindung betrifft ein Verfahren nach dem Oberbegriff des Anspruchs 1 und eine Auswuchtmaschine zur Durchführung dieses Verfahrens gemäß Oberbegriff des Anspruchs 5.

Durch die DE-A-2 548 729 ist ein Verfahren zur Ermittlung und Anzeige der Winkellage der Unwucht bei Auswuchtmaschinen mit Winkelanzeige, insbesondere bei gelenkwellenlosem Antrieb des auszuwuchtenden Körpers bekannt geworden, das sich dadurch auszeichnet, daß der Unwuchtwinkel in Längeneinheiten oder in dimensionslosen Einheiten die jeweils auf einen Umfang oder eine charakteristische Teilung des auszuwuchtenden Körpers beziehbar sind und einen Bereich von 360° erfaßt umgewandelt und/oder in solchen Einheiten angezeigt werden. Auch ist eine Einrichtung hierzu bekannt geworden, die sich auszeichnet, durch Mittel zur Umformung des gemessenen Winkelwertes durch mindestens eine Rechengröße und/oder eine Anzeigeeinrichtung für Längeneinheiten und/oder dimensionslose Einheiten. Es wird hierbei aus einem ersten ein Maß für den Umfang des Rotors in der Ausgleichsebene in dimensionslosen Einheiten darstellenden Zahlenwert sowie aus der ermittelten Winkellage ein zweiter Zahlenwert gebildet, der die Lage der Unwucht bezüglich der Referenzposition in den genannten Einheiten wiedergibt, d. h.

$$(\varphi°/360°) \times Z \text{ max.}$$

Hiermit wird auf dem Gebiet des Auswuchtens die Übertragung von gemessenen Unwuchtwinkeln auf einen auszugleichenden Rotor dadurch ermöglich, daß der Unwuchtwinkel umgewandelt wird in ein Längenmaß, welches von einem am untersuchten Körper angeordneten Nullpunkt beginnend am Umfang des Körpers angelegt mit seinem Endpunkt die Unwuchtwinkellage markiert, an der dann ein entsprechender Unwuchtausgleich stattfinden kann. Auch ist es möglich, wie in dieser Offenlegungsschrift offenbart ein Zahlenband an den Rotationskörper anzulegen und dieses Zahlenband, wenn es in einem Verhältnis zu einer bestimmten Nullstelle des Rotationskörpers steht mit Hilfe des angezeigten Übertragungswertes zur Auffindung der Unwuchtwinkellage heranzuziehen.

Damit läßt sich bei Körpern, die an ihrem Umfang von der Fertigung her bereits Markierungen tragen oder die mit einem Zahlenband versehen werden, der angezeigte Unwuchtwinkel auf den Körper übertragen. Die genannte Offenlegungsschrift offenbart auch anstelle eines am zu untersuchenden Körpers anzubringenden Zahlenbandes den Unwuchtwinkel auch an einer Tragrolle zu ermitteln, da diese in einem bestimmten Verhältnis zum Lagerzapfen des auszuwuchtenden Körpers steht. Hierzu ist es allerdings ebenfalls erforderlich, an der Tragrolle eine Winkelskala anzubringen.

Die Vorbereitung des Wuchtkörpers selbst, beispielsweise durch Anlegen eines Zahlenbandes, welches in Übereinstimmung mit einer am auszuwuchtenden Körper anzubringenden Nullmarke gebracht werden muß, oder das Anbringen einer Winkelskala auf einer Tragrolle für den auszuwuchtenden Rotor, die im allgemeinen nur schwer zugänglich ist und darüber hinaus nicht immer fehlerfrei abgelesen werden kann, erfordern einen beachtlichen Zeitaufwand, insbesondere dann, wenn es sich um Rotationskörper mit verschiedenem Durchmesser des Rotationskörpers selbst oder des Zapfens des Rotationskörpers handelt. Auch ist in diesem Fall stets ein erneutes Einstellen des Verhältnisses zwischen dem Radius der Tragrolle und dem Radius des Zapfens, was zu einer neuen Anzeigenskala führt, an der dann der Unwuchtwinkel zunächst abgelesen werden muß und anschließend auf den Rotationskörper übertragen werden muß, erforderlich.

Es lassen sich durch die mehreren manuellen Tätigkeiten des Ablesens und Abmessens Fehler in der Genauigkeit der Übertragung des Unwuchtwinkels auf den zu untersuchenden Körper nicht vermeiden.

In der zum Stand der Technik gemäß Art. 54/3 EPÜ gehörenden EP-A-0 045 505 wird eine Einrichtung zur automatischen Auffindung der Unwuchtwinkellage eines Rotors und dem gleichzeitigen positionierten Anhalten dieser Lage in einer vorbestimmten Winkelposition beschrieben, wobei diese Einrichtung folgendes enthält : zwei Lager zur drehbaren Lagerung der Enden des zu prüfenden Körpers ; einen Antriebsmotor mit Motorkontrolleinrichtungen ; Mittel zur Antriebsübertragung zwischen Motor und gelagertem Körper ; Schwingungsaufnehmer, die mit mindestens einem Lager verbunden sind und die pro Umdrehung die Schwingungsbewegung oder die Krafteinwirkung aufnehmen, die als Schwingungssignal der dynamischen Unwucht des Rotors entsprechen ; eine Pulsformerschaltung, um einen Phasenbezug des Schwingungssignals zu einer Referenzwinkellage herzustellen ; einen Pulsgenerator, um Winkelimpulse mit vorgegebenem Abstand zur Bestimmung der Rotation des Körpers abzugeben ; einen voreinstellbaren Zähler, in dem eine Zahl

$$(2n \times \varphi + \alpha)/a$$

voreingestellt wird, wobei n die Meßdrehzahl des Rotors, $\alpha$ der Winkel zwischen der vorbestimmten Stopwinkellage und der Referenzlage ist und a der Impulsabstand ist ; Mittel zur Erzeugung eines Bremssignals, welches den Motorkontrollmitteln zur Bremsung des Motors zugeführt wird ; Mittel, die verbunden sind mit der Pulsformerschaltung und Bremssignalerzeugung und zur Übertragung der Winkelimpulse zum voreingestellten Zähler nach Erhalt des auf das Bremssignal folgenden Phasenbezugs und daß der voreingestellte Zähler ein Signal abgibt zum Abschalten des Antriebsmotors, wenn das Phasensignal die vorgegebene Zahl erreicht hat, wobei der Antriebsmotor augenblicklich abgebremst wird, so daß die unwuchtige Stelle des Rotors an der vorbestimmten Stelle zur Ruhe kommt.

Ausgehend von dem durch die DE-A-2 548 729 bekannt gewordenen Stand der Technik liegt der vorliegenden Erfindung die Aufgabe zugrunde, unter Vermeidung der geschilderten Schwierigkeiten eine genaue Lage-Übertragung von Unwuchten auf den Rotor selbst zu erreichen, ohne daß eine Zwangssynchronisation zwischen Rotor und Auswuchtmaschine erforderlich ist.

Diese Aufgabe wird im Hinblick auf die Übertragung der Lage der Unwucht durch die im Kennzeichen des Anspruchs 1 enthaltenen Merkmale gelöst. Zufolge des Abbildens des Umfangs des Rotors mittels einer Impulsserie abhängig von der Unwucht des Rotors sind alle Fehler, die zufolge irgendwelcher Ungenauigkeiten beim Aufbringen von Zahlenbändern oder bei vorhandenen Markierungen am Körper selbst auftreten, ausgeschaltet und der Rotor ist nach dem Stillsetzen ohne Fehler in die Lage zur Beseitigung der Unwucht eindrehbar. Der zu untersuchende Körper muß nicht erst zu einem mit Markierungen versehenen Körper, beispielsweise durch ein Zahlenband ausgerüstet werden. Auch ist es nicht erforderlich, wenn eine Tragrolle oder bei Verwendung eines Bandantriebes die Umlenkrolle oder der Antriebsmotor für den Bandantrieb als Träger für den Impulsgeber verwendet wird, diesen zusätzlich mit einer Markierung zu versehen.

Gemäß Erfindung wird ein Stop-Start-Signal aus dem Unwuchtmeßsignal für die Messung der Unwucht gewonnen. Bei dem zu untersuchenden Rotor muß keine Umrüstung von einem glatten zu einem markierten Rotor geschehen.

Zufolge Zählung der bis zum Stillstand noch erfolgten Umläufe oder erzeugten Impulse ist in Ausgestaltung des erfinderischen Verfahrens (vgl. hierzu Anspruch 2) ein Auffinden der Unwuchtlage am zu untersuchenden Rotor jederzeit mit Hilfe der gespeicherten, dem Umfang des Rotors entsprechenden Impulsserie möglich.

Eine Ausgestaltung der Erfindung wird mit den kennzeichnenden Merkmalen des Anspruchs 3 vorgeschlagen. Bei einer Überwachung der Abstände der Einzelimpulse voneinander ist gleichzeitig eine Überwachung im Hinblick auf die Abweichung zwischen dem tatsächlichen Umfang des Rotors und dem durch die Impulse dargestellten Umfang des Rotors möglich.

Eine noch weitere Ausgestaltung des erfinderischen Verfahrens wird in den kennzeichnenden Merkmalen des Anspruchs 4 vorgeschlagen. Durch die Vorgabe der Meßdrehzahl ist eine Beeinflussung der Umläufe bis zum Stillstand des Rotors möglich, und es ist auch eine genaue Überwachung des Übertragungsvorganges gegeben.

Das Verfahren gemäß Ansprüchen 1 bis 4 wird auf einer Auswuchtmaschine ausgehend von den Merkmalen des Oberbegriffs des Anspruchs 5 mit den im Kennzeichen dieses Anspruchs enthaltenen Merkmalen durchgeführt.

Bei dieser Vorrichtung kann der Impulsgeber, der mit einer Zähleinrichtung zusammenwirkt, am Motor eines Bandantriebes oder an einer Umlenkrolle des Bandantriebes oder an der Tragrolle für den zu untersuchenden Rotor angeordnet sein. Als besonders geeignete Stelle zur Erzeugung eines Impulses pro Umdrehung, der ein Stop-Start-Signal bewirkt, ist der Nulldurchgang im Sinusverlauf von negativ nach positiv anzusehen.

Mit einer Ausgestaltung der Auswuchtmaschine gemäß Anspruch 6 ist ein eindeutiges Eindrehen des Rotors in die Bearbeitungslage möglich.

Eine Ausgestaltung wird mit den kennzeichnenden Merkmalen des Anspruchs 7 vorgeschlagen. Durch die Wahl des Impulsabstandes wird in besonders einfacher Weise eine Anpassung an die geforderte Winkelauflösung ermöglicht.

Eine noch weitere Ausgestaltung des Erfindungsgegenstandes wird mit den kennzeichnenden Merkmalen des Anspruchs 8 vorgeschlagen. Durch diese Ausgestaltung wird auch der verbleibende Fehler bei der Übertragung der Unwuchtlage berücksichtigt und kann somit beim Übertragen auf den zu untersuchenden Rotor mitbeseitigt werden.

In der nachfolgenden Beschreibung wird anhand von in Zeichnungen dargestellten Ausführungsbeispielen die Erfindung naher erläutert.

Es zeigt, in schematischer Darstellung :

Fig. 1 eine Auswuchtmaschine mit Antrieb für den zu untersuchenden Rotor

Fig. 2 eine Einrichtung, bei der vom Unwuchtmeßsignal die Zählung und Übertragung der Impulse gesteuert wird

Fig. 3 und Fig. 4 weitere Ausgestaltungen der Fig. 2.

In der nachfolgenden Beschreibung werden in den Figuren die Bauteile, die dieselbe Funktionsweise besitzen, mit denselben Bezugsziffern bezeichnet.

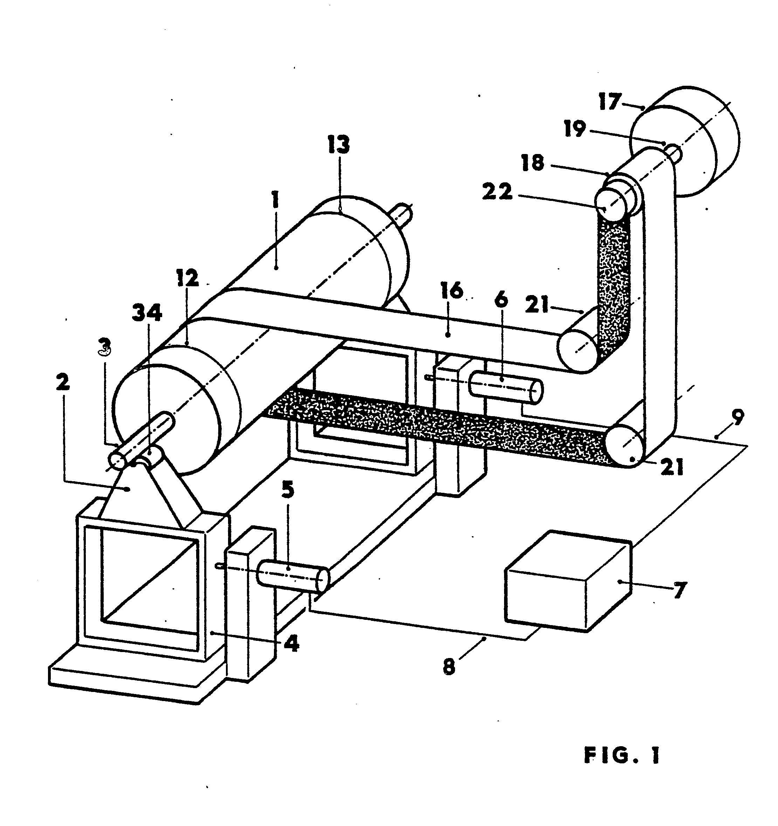

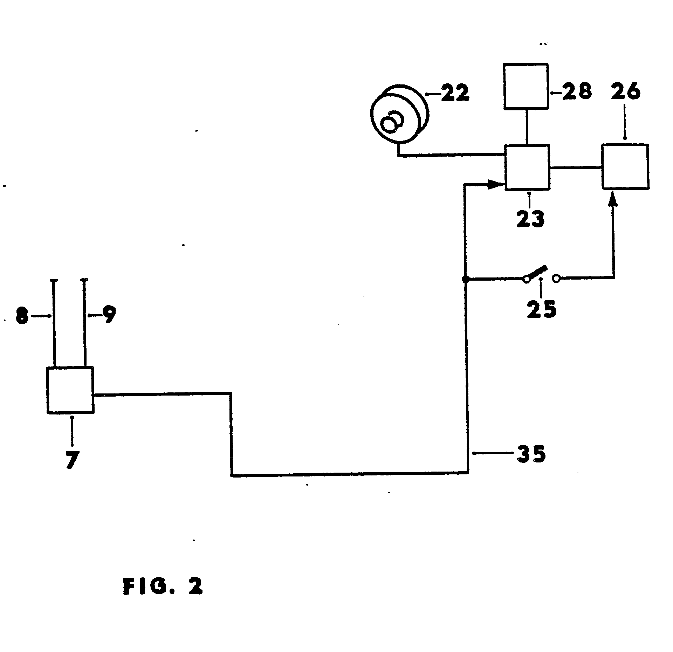

In Fig. 1 ist ein zu untersuchender Rotor 1 in einer Auswuchtmaschine, die Tragrollenlagerungen 2 für Rotorzapfen 3 besitzt, rotierbar gelagert. Die Tragrollenlagerung 2 stützt sich auf einer Einheit 4 für jeden Rotorzapfen 3 ab. Meßumformer 5, 6 wandeln die zufolge einer Unwucht auftretenden Schwingungen oder Kräfte an Einheiten 4 in elektrische Signale um, die über Leitungen 8, 9 als Information über die Unwucht einer Auswerteeinrichtung 7 zugeführt werden. Der zu untersuchende Rotor 1 wird von einem Band 16, welches den Rotor teilweise umschlingt, angetrieben (der Übersichtlichkeit halber wurde das Band um 90° in die Horizontale verschwenkt). Das Band 16 wird von einem Antriebsmotor 17, der eine Antriebsscheibe 18 auf einer Welle 19 trägt, über eine Spannrolle 20 und eine Umlenkrolle 21 angetrieben. Mit der Antriebsscheibe 18 ist ein Impulsgeber 22 verbunden, der je Umlauf der Antriebsscheibe 18 eine Impulsfolge an einen Zähler 23 (vgl. Fig. 2) weitergibt, in dem die Impulse gezählt werden.

In Fig. 2 wird eine Steuerung des Zählers 23 zur Durchführung des Verfahrens dargestellt. Aus den über die Leitungen 8, 9 kommenden Informationen über die Unwucht, wird durch Filterung in der Auswerteeinrichtung 7 und anschließender Verstärkung ein Signal mit sinusförmigem Signalverlauf über ein Umdrehung des zu untersuchenden Rotors 1 gebildet (vgl. auch Fig. 1). Dieses sinusförmige Signal bildet somit den Umfang einer Ausgleichsebene 12 bzw. 13 des zu untersuchenden Rotors 1 ab (vgl. auch Fig. 1). Hierbei kann in Ausgestaltung der Erfindung es empfehlenswert sein, die Drehzahl des Rotors zu überwachen, um sicherzustellen, daß das Filter richtig eingestellt ist. Über eine Stop-Start-Leitung 35 wird nunmehr ein charakteristischer Wert, insbesondere der Nulldurchgang des sinusförmigen Signals vom Negativen ins Positive, als Impuls dem Zähler 23 zugeführt, der bevorzugt als Vor-Rückwärtszähler ausgebildet ist. Bei jedem auftretenden Impuls wird die im Zähler 23 vorhandene Impulszahl einem Speicher 26 zugeführt, der Zähler 23 auf Null zurückgesetzt und erneut zur Zählung gestartet. Falls keine weitere Information, beispielsweise über die Beendigung des Meßvorganges, an den Speicher 26 gelangt, wird bei dem nächsten Stop-Start-Impuls über die Stop-Start-Leitung 35 erneut der oben beschriebene Vorgang wiederholt.

Nach Beendigung des Meßvorgangs wird der Schalter 25 geöffnet und die im Speicher 26 vorhandene Impulszahl weiterverarbeitbar gespeichert. Während des Auslaufvorgangs wird der Zähler 23 immer dann Null gesetzt, wenn sein Inhalt die gleiche Impulszahl besitzt, wie der Inhalt des Speichers 26. Nach Stillsetzen des zu untersuchenden Rotors wird dieser solange gedreht, bis der Indikator 28 die Nullstellung des Zählers 23 anzeigt. Damit befindet sich die Unwucht in der für den Ausgleich erforderlichen Winkellage. Damit ist die Erfindung in einfachster Form ausführbar.

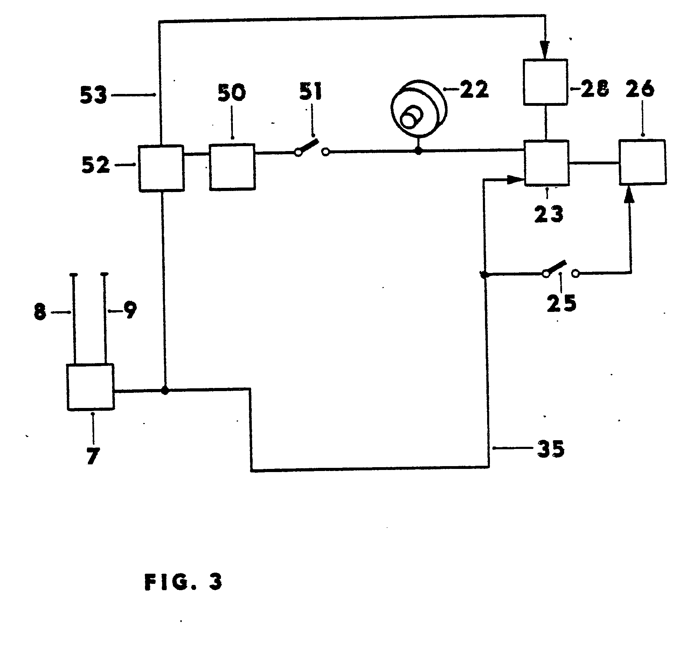

In Ausgestaltung wird (vgl. Fig. 3) während des Auslaufs des zu untersuchenden Rotors 1 von einem weiteren Impulszähler 50, der über einen weiteren Schalter 51 nach dem Meßvorgang eingeschaltet wird, die Anzahl der Impulse bis zum Stillstand des zu untersuchenden Rotors 1 speicherbar. Damit wird über eine Korrektureinheit 52 und eine Leitung 53 dem Indikator 28 der während des Auslaufs kumulierte Winkelfehler zugeführt und korrigiert somit die tatsächliche Nullstellung, also den Fehler zwischen tatsächlichem Umfang des Rotors und durch Impulszählung dargestelltem Umfang. Die Korrektureinheit 52 ermittelt einen Korrekturwert, der proportional dem Inhalt des Impulszählers 50 und einer fest eingestellten, im allgemeinen empirisch ermittelten Konstante ist.

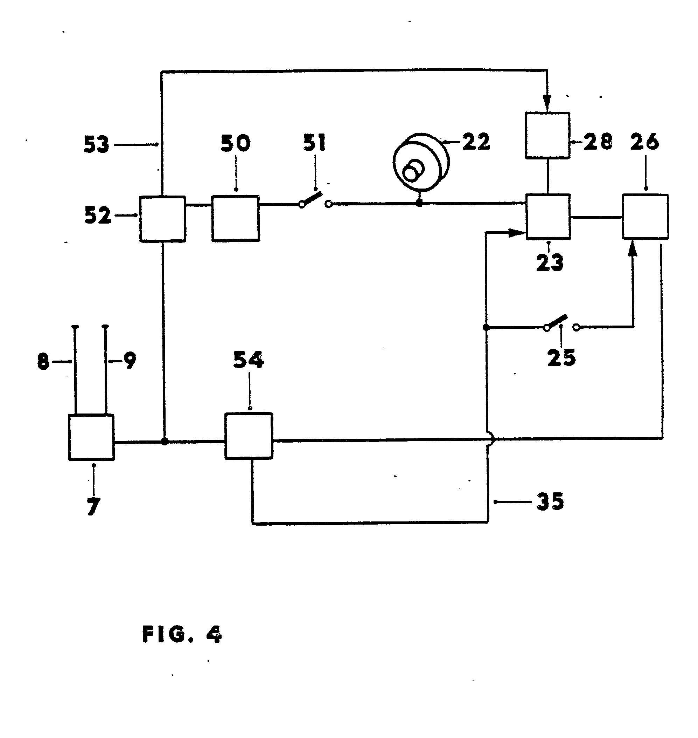

In einer weiteren Ausgestaltung wird (vgl. Fig. 4) die Korrektureinheit 52 von einer Abgleicheinheit 54 beeinflußt, in der der zeitliche Verlauf der Impulsfolge aus dem Speicher 26 mit dem auf der Leitung 35 auftretenden zeitlichen Abstand der Stop-Start-Impulse verglichen wird.

Anstelle des in Fig.1 dargestellten Bandantriebs kann auch ein Antrieb über Tragrollen 34 der Tragrollenlagerung 2 erfolgen, wobei in diesem Falle der Impulsgeber 22 dann in entsprechender Weise an der Tragrolle 34 angeordnet werden müßte. Auch können die Spannrolle 20 oder die Umlenkrolle 21 oder der Antriebsmotor 17 selbst als Träger für den Impulsgeber 22 dienen.

Zum Zwecke der Berücksichtigung des unterschiedlichen Schlupfes beim Anfahren und Bremsen des zu untersuchenden Rotors 1 wird gemäß erfinderischem Verfahren nach Anspruch 1 erfindungsgemäß im Speicher 26 ein gewichteter Mittelwert aus der Impulszahl des Zählers 23 beim Anfahren und der Impulszahl des Zählers 23 beim Bremsvorgang gespeichert. Bei der Gewichtung werden bevorzugt die Unterschiede in der Größe des Schlupfes beim Anfahren und Abbremsen berücksichtigt.

**Patentansprüche**

1. Verfahren zum Übertragen der gemessenen Lage der Unwucht eines auszuwuchtenden Rotors (1), auf dessen Umfang in einer Ausgleichsebene, bei dem der Rotor (1) in einer Auswuchtmaschine, die keine mit dem Rotor synchron umlaufenden Teile aufweist, in Rotation versetzt wird, dadurch gekennzeichnet, daß

— ein erster ein Maß für den Umfang des Rotors in der Ausgleichsebene in dimensionslosen Einheiten darstellender Zahlenwert die Anzahl der von einem mit dem Rotor (1) gekoppelten Impulsgeber (22) ausgehenden Impulse ist

— das Unwuchtmeßsignal des auszuwuchtenden Rotors (1) nach Filterung einen sinusförmigen Signalverlauf pro Umdrehung des auszuwuchtenden Rotors (1) erhält

— die Zählung nach jeder Umdrehung des Rotors (1) mit Hilfe eines von einer markanten Stelle des sinusförmigen Signalverlaufs abgeleiteten Stop-Start-Impuls beendet und erneut begonnen wird und der jeweils bei Beendigung der Zählung nach einer Umdrehung vorliegende Zahlenwert festgehalten wird

— der Rotor nach Abschalten des Antriebsmotors entsprechend dem zuletzt festgehaltenen Zahlenwert dann zum Stillstand gebracht wird, wenn die Anzahl der während dieser Verdrehung vom Impulsgeber (22) gelieferten Impulse gleich dem zuletzt festgehaltenen Zahlenwert ist.

2. Verfahren nach Anspruch 1, dadurch gekennzeichnet, daß die Anzahl der Umläufe des auszuwuchtenden Rotors (1) bis zu dessen Stillstand gezählt wird.

3. Verfahren nach Anspruch 1 und/oder 2, dadurch gekennzeichnet, daß der zeitliche Abstand der vom Impulsgeber (22) gelieferten Impulse überwacht wird.

4. Verfahren nach einem oder mehreren der vorhergehenden Ansprüche, dadurch gekennzeichnet, daß die Drehzahl des Rotors (1) während der Ermittlung der Unwuchtlage bis zum Stillsetzen überwacht wird.

5. Auswuchtmaschine zur Durchführung des Verfahrens nach einem oder mehreren der Ansprüche 1 bis 4 mit
— einer Rotorlagerung (2, 4)
— einem Rotorantrieb (16 bis 21), der keine synchron mit dem auszuwuchtenden Rotor (1) umlaufenden Teile besitzt
— Meßumformern (5, 6) zur Erzeugung von den Einfluß der Unwucht auf die Rotorlagerung repräsentierenden Meßsignalen
— einer Auswerteschaltung (7) zur Ermittlung der Lage der Unwucht auf dem Rotorumfang, gekennzeichnet durch
— einen mit dem auszuwuchtenden Rotor (1) gekoppelten Impulsgeber (22) zur Erzeugung einer dem Drehwinkel des Rotors proportionalen Zahl von Impulsen
— einen Vorwärts-Rückwärtszähler (23), dessen Zählereingang die Impulse des Impulsgebers (22) zugeführt sind
— eine in der Auswerteschaltung (7) vorgesehene Filteranordnung an deren Ausgang ein, den Unfang des Rotors (1) darstellendes Sinussignal vorhanden ist
— ein von einer charakteristischen Stelle dieses Signals abgeleitetes Arbeitssignal je Umdrehung des Rotors (1), das dem Zähler (23) zugeführt wird
— einen mit dem Ausgang des Zählers (23) verbundenen Speicher (26), der durch das Arbeitssignal zur Übernahme des Zählerstandes jeweils nach einer Umdrehung des Rotors (1) aktivierbar ist
— einer Anzeigeeinheit (28), die nach Abschalten des Antriebsmotors und Festhalten des Speicherinhaltes des Speichers (26) die Gleichheit zwischen dem Zahlenwert des Zählers (23) und des Speichers (26) signalisiert.

6. Auswuchtmaschine nach Anspruch 5, dadurch gekennzeichnet, daß ein weiterer Impulszähler (50) vorgesehen ist.

7. Auswuchtmaschine nach einem der vorhergehenden Ansprüche 5 oder 6, dadurch gekennzeichnet, daß der Impulsgeber (22) so angeordnet und ausgebildet ist, daß die von ihm gelieferten Impulse im Abstand von weniger als drei Winkelgrad Drehung des Rotors auftreten.

8. Auswuchtmaschine nach einem der vorhergehenden Ansprüche 5 bis 7, dadurch gekennzeichnet, daß eine Korrektureinheit (52) zur Kompensation des Fehlers vorgesehen ist, der sich aus einem eventuellen Unterschied zwischen dem in den Speicher (26) übernommenen Zählerstand und dem tatsächlichen Umfang des Rotors in der Ausgleichsebene (12, 13) ergibt.

**Claims**

1. A method of transferring the measured position of the unbalance of a rotor to be balanced (1), to its periphery in a correction plane, in which the rotor (1) is set in rotation in a balancing machine, which does not have any parts rotating synchronously with the rotor, characterised in that

a first numeric value representing a measure for the periphery of the rotor in the correction plane in dimensionless units is the number of pulses passing out of a pulse generator (22) coupled to the rotor (1)
the unbalance measuring signal of the rotor (1) to be balanced receives, after filtering, a sinusoidal signal path for each rotation of the rotor (1) to be balanced
counting is terminated and begun again after each rotation of the rotor (1) with the aid of a stop/start pulse derived from a marked place on the sinusoidal signal path and the numeric value, present in each case when counting is terminated after a rotation, is retained
the rotor is then brought to a standstill after switching off the drive motor in accordance with the numeric value last retained, when the number of pulses delivered by the pulse generator (22) during this rotation is equal to the last retained numeric value

2. A method according to claim 1, characterised in that the number of revolutions of the rotor (1) to be balanced is counted until said rotor is at a standstill.

3. A method according to claim 1 and/or 2, characterised in that the time interval of the pulses delivered by the pulse generator (22) is monitored.

4. A method according to one or more of the preceding claims, characterised in that the rotational speed of the rotor (1) is monitored while determining the unbalance position until standstill.

5. A balancing machine for carrying out the method according to one or more of claims 1 to 4 having :
— a rotor mounting (2, 4)
— a rotor drive (16 to 21), which does not have any parts rotating synchronously with the rotor (1) to be balanced
— measurement converters (5, 6) for producing measurement signals which represent the effect of the unbalance on the rotor mounting
— an evaluation circuit (7) for determining the position of the unbalance on the rotor periphery, characterised by :
— a pulse generator (22), coupled to the rotor (1) to be balanced, for producing a number of pulses proportional to the angle of rotation of the rotor
— a forward/backward counter (23), to the counter input of which the pulses of the pulse generator (22) are supplied
— a filter arrangement provided in the evaluation circuit (7), at the output of which filter arrangement a sinusoidal signal, representing the periphery of the rotor (1), is present
— an operating signal, derived from a characteristic place of this signal, for each rotation of the rotor (1), which is supplied to the counter (23)
— a store (26), connected to the output of the counter (23), which may be activated by the operating signal for taking over the counter state in each case after a rotation of the rotor (1)

— a display unit (28), which signals equality between the numeric value of the counter (23) and of the store (26) after switching off the drive motor and retaining the store content of the store (26).

6. A balancing machine according to claim 5, characterised in that a further pulse counter (50) is provided.

7. A balancing machine according to any one of the preceding claims 5 or 6, characterised in that the pulse generator (22) is so arranged and formed that the pulses delivered by it occur at an interval of less than three angle degrees of rotation of the rotor.

8. A balancing machine according to any one of the preceding claims 5 to 7, characterised in that a correction unit (52) for compensating the error is provided which arises from a possible difference between the counter state taken over into the store (26) and the actual periphery of the rotor in the correction plane (12, 13).

**Revendications**

1. Procédé de transmission de la position mesurée du balourd d'un rotor (1) à équilibrer à la périphérie duquel dans un plan d'équilibrage dans lequel le rotor (1) est mis en rotation dans une machine d'équilibrage qui ne comporte aucune partie tournant en synchronisme avec le rotor, caractérisé en ce que :

— en premier lieu, il y a une mesure du périmètre du rotor dans le plan d'équilibrage dans des unités sans dimension des valeurs de comptage représentant le nombre d'impulsions émis par un générateur d'impulsions (22) couplé avec le rotor (1),

— on obtient le signal de mesure du balourd du rotor (1) à équilibrer après filtrage d'une courbe de signal sinusoïdale par tour du rotor (1),

— le comptage après chaque rotation du rotor (1) à l'aide d'une impulsion marche-arrêt dérivée d'une position remarquable de la courbe de signal sinusoïdale est terminé et recommencé et après la fin du comptage après un tour la valeur du comptage est conservée,

— le rotor après déconnexion du moteur d'entraînement est de façon correspondante à la valeur conservée du comptage est amené à l'arrêt, si le nombre d'impulsions délivrées par le générateur d'impulsions (22) pendant cette rotation est égal à cette valeur conservée en définitive.

2. Procédé selon la revendication 1, caractérisé en ce que le nombre de tours du rotor (1) à équilibrer est comptabilisé jusqu'à son arrêt.

3. Procédé selon la revendication 1 et/ou la revendication 2, caractérisé en ce que le laps de temps entre les impulsions délivrées par le générateur d'impulsions (22) est surveillé.

4. Procédé selon l'une ou plusieurs des revendications précédentes, caractérisé en ce que le nombre de tours du rotor (1) au cours de la détermination de la position du balourd est surveillé jusqu'à l'arrêt.

5. Machine d'équilibrage pour la mise en œuvre du procédé selon une ou plusieurs des revendications 1 à 4, comportant :

— un support de rotor (2, 4)

— un entraînement de rotor (16 à 21) qui ne possède aucune partie synchronisée avec le rotor (1) à équilibrer

— des convertisseurs de mesure (5, 6) pour la production de signaux de mesure représentatifs de l'influence du balourd sur le support de rotor

— un circuit de traitement (7) pour la détermination de la position du balourd à la périphérie du rotor (1) grâce au générateur d'impulsions (22) couplé au rotor (1) pour l'obtention d'un nombre d'impulsions proportionnel à l'angle de rotation du rotor (1)

— un compteur marche-avant marche-arrière (23) dont les impulsions du générateur (22) sont conduites à l'entrée du compteur

— un signal sinusoïdal représentant la périphérie du rotor (1) est présent avec un dispositif de filtrage placé dans le circuit de traitement (7) à sa sortie

— un signal de travail délivré à partir d'une position caractéristique de ce signal à chaque révolution du rotor (1) qui est amené au compteur (23)

— une mémoire (26) reliée à la sortie du compteur (23) qui peut être activée par le signal de travail pour la fixation de l'état du compteur après chacune des révolutions du rotor (1)

— un bloc d'affichage (28) qui après déconnexion du moteur d'entraînement et conservation du contenu de la mémoire (26) signale l'égalité entre la valeur du comptage du compteur (23) et de celle de la mémoire (26).

6. Machine d'équilibrage selon la revendication 5, caractérisée en ce qu'on prévoit un compteur d'impulsions supplémentaire.

7. Machine d'équilibrage selon l'une des revendications précédentes 5 ou 6, caractérisée en ce que le générateur d'impulsions (22) est placé et formé de façon à ce que les impulsions qu'il délivre se produisent à des intervalles inférieurs à une rotation du rotor (1) de trois degrés d'angle.

8. Machine d'équilibrage selon l'une des revendications précédentes 5 à 7, caractérisée en ce qu'un bloc de correction (52) est prévu pour la compensation de l'erreur qui se présente à partir d'une différence éventuelle entre le contenu du compteur fixé dans la mémoire (26) et le périmètre réel du rotor (1) dans le plan d'équilibrage.

FIG. 1

FIG. 2

FIG. 3

0 147 558

FIG. 4